# EUROPEAN PATENT SPECIFICATION

(11) **EP 3 431 375 B1**
(45) Date of publication and mention of the grant of the patent: **09.08.2023**
(21) Application number: 17766373.9
(22) Date of filing: 01.03.2017
(51) Int. Cl.: F16F 9/46, F16F 9/32, B60G 17/0165, B62K 25/08, F16F 9/19, B62K 25/04

(54) **DAMPER CONTROL DEVICE AND SUSPENSION DEVICE**
DÄMPFERREGELVORRICHTUNG UND AUFHÄNGEVORRICHTUNG
DISPOSITIF DE COMMANDE D'AMORTISSEUR ET DISPOSITIF DE SUSPENSION

(30) Priority: 17.03.2016 JP 2016053224
(43) Date of publication of application: 23.01.2019
(73) Proprietor: KYB Corporation, Tokyo 105-6111 (JP)
(72) Inventor: AWANO, Koichiro, Tokyo 105-6111 (JP); MOCHIZUKI, Mitsuteru, Tokyo 105-6111 (JP)
(74) Representative: MFG Patentanwälte Meyer-Wildhagen Meggle-Freund Gerhard PartG mbB
(86) International application number: PCT/JP2017/008159
(87) International publication number: WO 2017/159370

(56) References cited:
- WO-A1-03/040586
- WO-A1-2015/041298
- JP-A- H0 411 511
- JP-A- H0 411 511
- JP-A- S6 137 511
- JP-A- H02 182 518
- JP-A- H02 182 518
- JP-U- S6 395 991
- US-A- 5 133 574
- US-A1- 2004 124 049
- US-A1- 2005 167 943
- US-A1- 2012 247 888
- US-B1- 6 360 148

## Description

### Technical Field

The present invention relates to improvement of a damper control device, and a suspension device.

### Background Art

As a control device for controlling damping force for a damper interposed between a body and a wheel of a motorcycle, as disclosed in JP 2005-199944, there is a device that makes extension side damping force of a rear wheel side damper to be smaller than in the normal state when a throttle position (opening degree) is equal to or less than a reference position, and a brake is not applied.

This control device sets the extension side damping force of the rear wheel side damper to be small, with a state where the throttle position is equal to or less than the reference position and the brake is not applied, as jump start time, sets the rear wheel side damper to be easy to extend during the jump, and stabilizes posture of the motorcycle during the jump.

WO 03/040586 A1 relates to a shock absorber comprising a cylinder section and a piston section that can be moved therein, the piston section and cylinder section each being provided with fixings for connection with the parts that can be moved with respect to one another and said piston section being sealed with respect to said cylinder section in order to delimit chambers on either side thereof.

US 2004/0124049 A1 relates generally to the field of suspension devices. More particularly, the present invention relates to control systems and methods that utilize a specially tuned damper, controller, and sensor to trigger an end stop function.

JP HO4 11511 A relates to improve the riding comfortableness while preventing the delay of a damping force by having the damping force determined in accordance with a piston position.

JP HO2 182518 A relates to prevent a damper from bottoming, to secure the steady landing of a motorcycle, by controlling in a motorcycle damper the damping force determined by the current of a linear solenoid, and by specifying the optimal damping force characteristics in the compression stroke.

Document JPS6137511A discloses another known damper control device.

### Summary of the Invention

In such a conventional control device, although body posture of the motorcycle during the jump can be stabilized, the damping force of the damper at the time of landing is not taken into consideration. Therefore, in the conventional damper control device, when a vehicle performs a jump with a relatively high altitude, the damping force of the damper is too small so that the damper contracts most, and a large shock is applied to a rider.

As described above, the conventional damper control device has a problem that the damping force suitable for the magnitude of the jump of the vehicle of cannot be exerted by the damper.

Thus, the present invention has been invented for improving the above problem, and an object of the present invention is to provide a damper control device and a suspension device in which the damper can exert an optimum damping force for the magnitude of jump of a vehicle.

According to a first aspect, the invention provides a damper control device in accordance with independent claim 1. According to a second aspect, the invention provides a suspension device in accordance with independent claim 4. Further aspects of the invention are set forth in the dependent claims, the drawings and the following description.

Since the damper control device and the suspension device of the present invention control the damping force of the damper based on an extension time, when the jump of the vehicle is small, the damping force of the damper does not become excessively large, or when the jump of the vehicle is large, the damping force of the damper does not become excessively small, and a large shock is not applied to a rider of the vehicle V.

### Brief Description of Drawings

Fig. 1 is a system configuration diagram of a suspension device according to an embodiment.
Fig. 2 is a schematic diagram of a damper.
Fig. 3 is a control block diagram of a damper control device according to an embodiment.
Fig. 4 is a flowchart showing an example of a calculation processing procedure of a damping force command value in the damper control device of an embodiment.

### Description of Embodiments

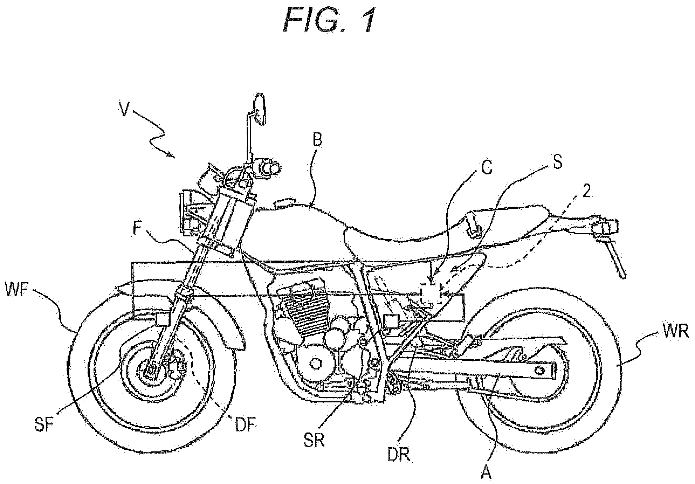

The present invention will be described below based on the embodiment shown in the drawings. As shown in Figs. 1 to 3, a suspension device S according to an embodiment is configured to include a front wheel side damper DF interposed between a body B and a front wheel WF of a vehicle V that is a straddle-type vehicle, a rear wheel side damper DR that is a rear wheel side damper interposed between the body B and a rear wheel WR, and a damper control device C.

Each part will be described in detail, and the vehicle V is assumed to be a motorcycle that is the straddle-type vehicle in this example. The front wheel side damper DF is built in a front fork F interposed between the body B and the front wheel WF together with a front wheel side suspension spring not shown so as to exert damping force at the time of extension and contraction.
The rear wheel side damper DR is interposed between the body B and a swing arm A that rotatably holds the rear wheel WR, together with a rear wheel side suspension spring not shown, and exerts damping force at the time of extension and contraction.

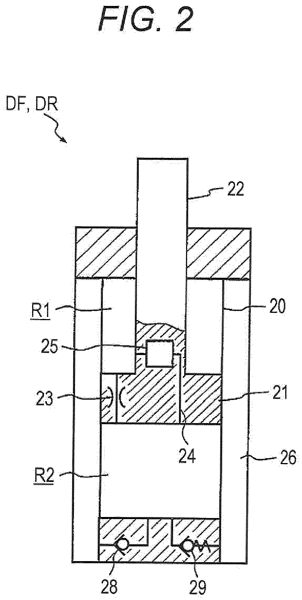

In this example, as shown in Fig. 2, both the front wheel side damper DF and the rear wheel side damper DR, are configured to include: a cylinder 20; a piston 21 that is slidably inserted into the cylinder 20 and partitions the cylinder 20 into an extension side chamber R1 and a compression side chamber R2; a piston rod 22 that is movably inserted to the cylinder 20, and is connected to the piston 21; a damping valve 23 that is provided in the piston 21, and makes the extension side chamber R1 and the compression side chamber R2 communicate with each other; a bypass passage 24 that makes the extension side chamber R1 and the compression side chamber R2 communicate with each other by bypassing the damping valve 23; a damping force adjustment valve 25 provided in the middle of the bypass passage 24; a reservoir 26 that supplies and discharges hydraulic fluid that is excessive or insufficient in the cylinder 20 by the piston rod 22 that enters and exits the cylinder 20; a suction passage 28 that allows only a flow of the hydraulic fluid from the reservoir 26 to the compression side chamber R2; and a pressure side valve 29 that applies resistance to the flow of the hydraulic fluid from the compression side chamber R2 to the reservoir 26.

Although not shown in detail in the drawing, the damping force adjustment valve 25 is an electromagnetic valve in this example, and can change the resistance applied to the flow of the passing hydraulic fluid by adjusting an opening degree. In this case, the damping force adjustment valve 25 applies resistance to both flow of the hydraulic fluid from the extension side chamber R1 to the compression side chamber R2 and flow of the hydraulic fluid from the compression side chamber R2 to the extension side chamber R1. There are two flows of hydraulic fluid, that is, a flow of hydraulic fluid passing through the damping valve 23 and a flow of hydraulic fluid passing the damping force adjustment valve 25 and passing through the bypass passage 24. Therefore, when the opening degree of the damping force adjustment valve 25 is adjusted, the resistance applied to the flow of the hydraulic fluid flowing through the bypass passage 24 is adjusted, a damping coefficient changes, and the damping force exerted by the dampers DF, DR changes. Therefore, with this dampers DF, DR, both the damping force (extension side damping force) during an extension stroke and the damping force (compression side damping force) during a contraction stroke can be adjusted by adjusting the opening degree of the damping force adjustment valve 25. The damping force adjustment valve 25 may be an electromagnetic relief valve capable of adjusting an valve opening pressure, or may be a rotary valve driven by a rotary actuator such as a stepping motor, and may be used as long as the damping force adjustment valve 25 at least can adjust the damping force in the compression side exerted by the dampers DF, DR.

Subsequently, the control device C is configured to include: stroke sensors SF, SR that detect a stroke of the dampers DF, DR; and a control unit 2 that counts the extension time of the dampers DF, DR from the stroke detected by the stroke sensors SF, SR, adjusts the resistance applied to hydraulic fluid by the damping force adjustment valve 25, and controls the damping force exerted by the dampers DF, DR.

The stroke sensors SF, SR detect the stroke of the corresponding dampers DF, DR, respectively. The stroke sensors SF, SR may be built in the dampers DF, DR, or may be interposed between the body B, and the front wheel WF and the rear wheel WR.

The control unit 2 processes the signals output from the stroke sensors SF, SR described above, counts the extension time of the dampers DF, DR, obtains a damping force command value including a command given to the damping force adjustment valve 25 according to the extension time, and supplies a current to the damping force adjustment valve 25 as instructed by the damping force command value.

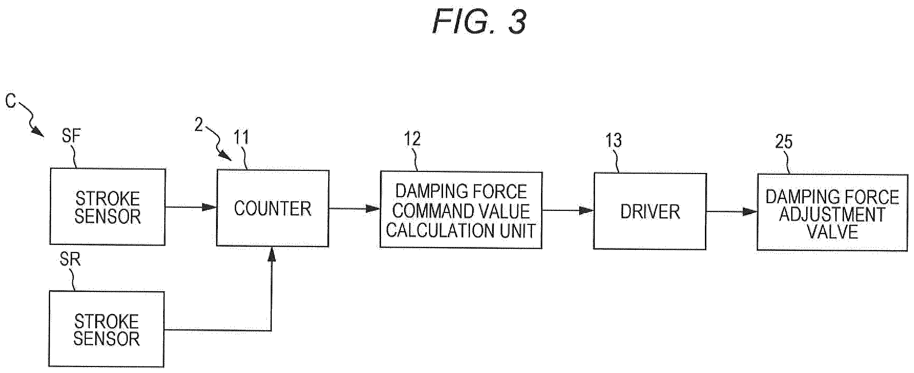

As shown in Fig. 3, the control unit 2 includes: a counter 11 that counts the extension time of the dampers DF, DR; a damping force command value calculation unit 12 that obtains a damping force command value from the extension time; and a driver 13 that supplies a current to the damping force adjustment valve 25 as instructed by the damping force command value.

The counter 11 detects switching of the dampers DF, DR from the contraction stroke to the extension stroke from the signals output by the stroke sensors SF, SR, and counts the time with this switching time as a starting point.
This counting is continued until an extension and contraction direction is switched to contraction. More specifically, the stroke sensors SF, SR detect the stroke lengths of the dampers DF, DR at a predetermined sampling period. Therefore, the counter 11 determines whether the dampers DF, DR are in the extension stroke or the contraction stroke from the difference between the stroke lengths of the dampers DF, DR obtained in the previous sampling period and the stroke lengths of the dampers DF, DR obtained in the current sampling period. Then, when the dampers DF, DR are switched from the contraction stroke to the extension stroke, the counter 11 counts the time during which the dampers DF, DR are in the extension stroke with a time point in which switching is recognized, as a starting point. When the dampers DF, DR are switched from the extension stroke to the contraction stroke, the counter 11 stops the counting and resets the extension time to zero. It should be noted that the counter 11 continues counting even when the dampers DF, DR are in a stop state in which the dampers DF, DR do not extend or contract after being switched to the extension stroke. That is, the extension time is the time from when the dampers DF, DR are switched from the contraction stroke to the extension stroke until the dampers DF, DR are switched to the contraction stroke.

The damping force command value calculation unit 12 obtains the damping force command value for increasing the damping force of the dampers DF, DR according to the obtained extension time. In this example, since the damping force adjustment valve 25 adjusts the opening degree, in order to increase the damping force of the dampers DF, DR in proportion to the extension time, the damping force command value calculation unit 12 obtains the damping force command value so that damping coefficients of the dampers DF, DR increase. More specifically, the damping force command value calculation unit 12 obtains the damping force command value so that the opening degree of the damping force adjustment valve 25 becomes smaller as the extension time becomes longer.

In this example, the control unit 2 counts the extension time for each of the dampers DF, DR, and adjusts the opening degree of the damping force adjustment valve 25 separately for the dampers DF, DR. Therefore, the damping force command value calculation unit 12 obtains the damping force command value for each of the dampers DF, DR.

In this example, the damping force command value calculation unit 12 obtains the damping force command value so that the damping coefficients of the dampers DF, DR increase in proportion to the obtained extension time. Alternatively, the damping force command value may be obtained so that the damping coefficients of the dampers DF, DR are increased stepwise according to the extension time or in proportion to a value of n-th power (n is a value larger than 1) of the extension time. The damping force command value may be obtained by preparing a map for obtaining the damping force command value with the extension time of the dampers DF, DR as a parameter, and performing map calculation from the extension time by the damping force command value calculation unit 12.

When the damping force adjustment valve 25 adjusts the valve opening pressure, the damping force command value calculation unit 12 may increase the damping force by obtaining the damping force command value so that the valve opening pressure of the damping force adjustment valve 25 is larger as the obtained extension time is longer. Since there is a limit in increasing of the damping force, the damping force command value may be limited to the damping force command value that maximizes the damping force or the damping coefficients of the dampers DF, DR.

When the extension time before the counter 11 resets the extension time is equal to or longer than a predetermined time, the damping force command value calculation unit 12 maintains the damping force command value for a predetermined time after the extension time of the counter 11 is reset. In this way, the damping force generated by the dampers DF, DR is maintained to be high for a while even when the dampers DF, DR are switched from the extension stroke to the contraction stroke. It is expected that, as the extension time is longer, required time for shrinkage is longer. Thus, the predetermined time may be changed so as to become longer as the extension time is longer depending on the extension time.

The driver 13 has a drive circuit for supplying a current to the damping force adjustment valve 25 and supplies a current to the damping force adjustment valve 25 according to an instruction of the damping force command value obtained as described above. The driver 13 may detect the current flowing through the damping force adjustment valve 25 and control the current flowing through the damping force adjustment valve 25 by current feedback control. In this way, the driver 13 supplies the current to the damping force adjustment valve 25, the opening degree of the damping force adjustment valve 25 is adjusted according to the instruction of the damping force command value, and the damping force of the dampers DF, DR is controlled.

As can be understood from the foregoing, the control unit 2 counts the extension time for each of the dampers DF, DR, and increases the damping force generated by the dampers DF, DR as the extension time of the dampers DF, DR is longer.

A hardware resource in each part of the control unit 2 described above, specifically, although not shown, for example, may be configured as a known system including: an amplifier for amplifying the signals output by the stroke sensors SF, SR; a converter that converts an analog signal into a digital signal; a computer system composed of a storage device such as a central processing unit (CPU) or a read only memory (ROM), a random access memory (RAM), a crystal oscillator, and a bus line connecting these components; and a drive circuit that drives the damping force adjustment valve 25 forming part of the driver 13. A control processing procedure for processing each signal to obtain the damping force command value and controlling the driver 13 may be stored in advance in the ROM or another storage device, as a program.

The control unit 2 is a known computer system as hardware. When the vehicle V on which the damper control device C is mounted includes an electronic control unit (ECU), the control unit 2 may be integrated into the ECU without being separately provided.

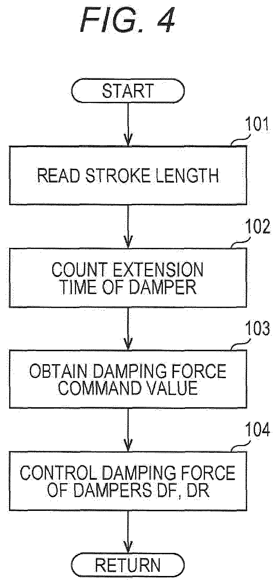

Here, a processing procedure in the control unit 2 of the damper control device C described above will be described with reference to a flowchart shown in Fig. 4. First, the control unit 2 reads the stroke lengths detected by the stroke sensors SF, SR (step 101). Subsequently, the control unit 2 counts the extension time of the dampers DF, DR (step 102). When the dampers DF, DR are in the contraction stroke, the counter 11 resets the extension time. The control unit 2 obtains the damping force command value from the counted extension time (step 103). The control unit 2 supplies a current from the driver 13 to the damping force adjustment valve 25 to control the damping force of each of the dampers DF, DR (step 104). The control unit 2 repeatedly processes from steps 101 to 104 described above, and controls the damping force of the dampers DF, DR.

As described above, the control unit 2 executes the series of processes described above, thereby realizing the processes of each part of the counter 11, the damping force command value calculation unit 12, and the driver 13. Each part described above is realized by reading the program described above and executing each calculation processing described above by the CPU.

The damper control device C and the suspension device S are configured as described above and control the damping force of the dampers DF, DR based on the extension time of the dampers DF, DR.

Here, when the vehicle V jumps and moves away from the ground, the dampers DF, DR are not subjected to the compressive force from the wheels WF, WR, and therefore extend. That is, when the vehicle V jumps, the dampers DF, DR are always switched to the extension stroke. The longer air time of the vehicle V is, the longer the extension time described above becomes. Therefore, when the extension time is long, the maximum separation distance between the ground and the vehicle V increases for the extent of the extension time, and the jump becomes large. The jump includes not only a case where the vehicle V jumps upward against the force of gravity but also a case where the vehicle V falls to the ground that is deep from a high place. Even when the vehicle V falls from a high place, if the air time is long, the magnitude of the jump increases as similar to a case of jumping upward.

The higher the jump height of the vehicle V is, the greater the inertia force acting on the vehicle body B becomes. Thus, the force for compressing the dampers DF, DR at the time of landing of the vehicle V also increases.

Since the damper control device C and the suspension device S of the present invention control the damping force of the dampers DF, DR based on the extension time, the damping force exerted by the dampers DF, DR can be optimally controlled according to the magnitude of the jump of the vehicle V. Therefore, in the damper control device C and the suspension device S of the present invention, the damping force of the dampers DF, DR does not become excessively large when the jump of the vehicle V is small or the damping force of the dampers DF, DR does not become excessively small when the jump of the vehicle V is large. Therefore, in the damper control device C and the suspension device S of the present invention, a large shock is not applied to the rider of the vehicle V. As described above, according to the damper control device C and the suspension device S of the present invention, the dampers DF, DR can exert the optimum damping force according to the magnitude of the jump of the vehicle V.

Specifically, in the damper control device C and the suspension device S of this example, the longer the extension time is, the greater the damping force of the dampers DF, DR is made. That is, in the damper control device C and the suspension device S of the present invention, the greater the magnitude of the jump of the vehicle V is, the greater the damping force exerted by the dampers DF, DR is made. Thus, the damping force of the dampers DF, DR increases when the vehicle V lands after the jump. Therefore, in the case of a small jump, the damping force of the dampers DF, DR does not become excessively large, an excessive shock is not applied to the rider, and in the case of a large jump, the damping force of the dampers DF, DR does not become excessively small, and the most contraction of the dampers DF, DR can be suppressed and the load of excessively large shock on the rider can be suppressed. From the viewpoint of alleviating the load of the shock on the rider, it is sufficient to increase only the compression side damping force in the damping force of the dampers DF, DR. Thus, such configuration may be adopted. When the extension side damping force of the dampers DF, DR is also increased according to the length of the extension time, the damping force of the dampers DF, DR after the landing of when the contraction stroke is made transition to the extension stroke also can be large.
Thus, sudden extension of the suspension spring can also be suppressed and rebound of the vehicle V can be suppressed.

In the damper control device C and the suspension device S of this example, stroke sensors SF, SR for detecting the stroke lengths of the dampers DF, DR are provided, and the extension time is obtained from the stroke lengths. Since the extension time is obtained from the stroke length in the damper control device C in this way, counting of the extension time becomes highly easy and correct extension time can be obtained. Since the stroke sensors SF, SR for detecting the stroke lengths of the dampers DF, DR are provided, in the case where there is a plurality of dampers in the damper control device C, the extension time of the dampers DF, DR are obtained, and the damping force of the dampers DF, DR can be optimally controlled. In the case of the motorcycle of this example, the present invention can be applied only to the front side damper DF or the rear side damper DR. Since the stroke sensors SF, SR detect the stroke lengths of the dampers DF, DR, the stroke sensors SF, SR can be incorporated in the dampers DF, DR, so that it is not necessary to provide a special structure for attaching the stroke sensors SF, SR in the vehicle V.

When the extension time is short enough to recognize that the vehicle V is not jumping, there is no need to increase the damping force of the dampers DF, DR. Therefore, when the extension time is equal to or less than a preset threshold value, the damping force command value calculation unit 12 obtains the damping force command value so that the damping coefficients of the dampers DF, DR are set to predetermined values regardless of the extension time. In the case where the damping force adjustment valve 25 can directly control the damping force of the dampers DF, DR, the damping force command value calculation unit 12 obtains the damping force command value so that the damping force command value is a predetermined value regardless of the extension time.

The control in the damper control device C may be used in combination with other control. For example, control may be performed by using this control together with posture control of the vehicle body B by skyhook control or the like, comparing the damping force command value by the posture control with the damping force command value by the control of the present invention, and adopting the damping force command value that increases the generation damping force of the dampers DF, DR.

Although the vehicle V is described as a straddle-type vehicle in this example, the control device C and the suspension device S can be used for controlling a damper of an automobile or the like. However, the control device C and the suspension device S are effective when being adopted to a saddle-ride vehicle with which the vehicle V is utilized for a motocross or off-road, and the jump frequently occurs.

When hydraulic fluid of the dampers DF, DR is electrorheological fluid or magnetorheological fluid, instead of providing the damping force adjustment valve 25 in the bypass passage 24, an electrode or coil for applying an electric or magnetic field may be provided so that the damping force adjustment can be performed. In this case, the bypass passage 24 may also be eliminated, and instead of the damping valve 23, an electrode or a coil may be provided in a passage communicating the extension side chamber R1 and the compression side chamber R2.

Although the preferred embodiments of the present invention have been described in detail, modifications, variations and changes can be made without departing from the scope of the claims.

## Claims

1. A damper control device (C) controlling damping force of a damper (DF, DR) based on extension time of the damper (DF, DR) that can adjust the damping force and is interposed between a body (B) and a wheel (WF, WR) in a vehicle (V), comprising:
stroke sensors (SF, SR) that detect a stroke of the damper (DF, DR); and
a counter (11) that detects switching of the damper (DF, DR) from the contraction stroke to the extension stroke from the signals output by the stroke sensors (SF, SR), and counts the extension time with this switching time as a starting point,
wherein the counter (11) stops the counting and resets the extension time to zero when the damper (DF, DR) is switched from the extension stroke to the contraction stroke, and continues counting even when the damper (DF, DR) is in a stop state in which the damper (DF, DR) do not extend or contract after being switched to the extension stroke,
and the damper control device (C) sets the damping force in a compression side of the damper (DF, DR) to be larger as the extension time of the damper (DF, DR) is longer.

2. The damper control device (C) according to claim 1, wherein
the damper control device (C) sets the damping force in an extension side of the damper (DF, DR) to be larger as the extension time of the damper (DF, DR) is longer.

3. The damper control device (C) according to claim 1, wherein
the damper control device (C) includes a stroke sensor (SF, SR) that detects a stroke length of the damper (DF, DR), and
obtains the extension time from the stroke length.

4. A suspension device (C) comprising:
a damper (DF, DR) that can adjust a damping force and is configured to be interposed between a body (B) and a wheel (WF, WR) of a straddle-type vehicle (V), and
the damper control device (C) according to any of claims 1 to 3.

## Patentansprüche

1. Dämpfersteuerungsvorrichtung (C) zum Steuern einer Dämpfungskraft eines Dämpfers (DF, DR) basierend auf einer Ausfahrzeit des Dämpfers (DF, DR), die die Dämpfungskraft einstellen kann und zwischen einer Karosserie (B) und einem Rad (WF, WR) in einem Fahrzeug (V) angeordnet ist, umfassend:
Hubsensoren (SF, SR), die einen Hub des Dämpfers (DF, DR) erfassen; und
einen Zähler (11), der ein Umschalten des Dämpfers (DF, DR) vom Einfahrhub zum Ausfahrhub ausgehend von den von den Hubsensoren (SF, SR) ausgegebenen Signalen detektiert und die Ausfahrzeit mit dieser Umschaltzeit als Startpunkt zählt,
wobei der Zähler (11) die Zählung stoppt und die Ausfahrzeit auf Null zurücksetzt wenn der Dämpfer (DF, DR) vom Ausfahrhub in den Einfahrhub umgeschaltet wird, und die Zählung fortsetzt selbst wenn sich der Dämpfer (DF, DR) in einem Stoppzustand befindet, in dem der Dämpfer (DF, DR) nach dem Umschalten in den Ausfahrhub weder ausfährt noch einfährt,
und die Dämpfersteuerungsvorrichtung (C) die Dämpfungskraft in einer Druckseite des Dämpfers (DF, DR) so einstellt, dass sie umso größer ist, je länger die Ausfahrzeit des Dämpfers (DF, DR) ist.

2. Dämpfersteuerungsvorrichtung (C) nach Anspruch 1, wobei
die Dämpfersteuerungsvorrichtung (C) die Dämpfungskraft in einer Ausfahrseite des Dämpfers (DF, DR) so einstellt, dass sie umso größer ist, je länger die Ausfahrzeit des Dämpfers (DF, DR) ist.

3. Dämpfersteuerungsvorrichtung (C) nach Anspruch 1, wobei
die Dämpfersteuerungsvorrichtung (C) einen Hubsensor (SF, SR) enthält, der eine Hublänge des Dämpfers (DF, DR) erfasst und
die Ausfahrzeit aus der Hublänge ermittelt.

4. Aufhängevorrichtung (C), umfassend:
einen Dämpfer (DF, DR), der eine Dämpfungskraft einstellen kann und so konfiguriert ist, dass er zwischen einer Karosserie (B) und einem Rad (WF, WR) eines Zweiradfahrzeugs (V) angeordnet ist, und
die Dämpfersteuerungsvorrichtung (C) nach einem der Ansprüche 1 bis 3.

## Revendications

1. Dispositif de commande d'amortisseur (C) contrôlant une force d'amortissement d'un amortisseur (DF, DR) basé sur un temps d'extension de l'amortisseur (DF, DR) qui peut ajuster la force d'amortissement et est interposé entre une carrosserie (B) et une roue (WF, WR) dans un véhicule (V), comprenant :
des capteurs de course (SF, SR) qui détectent une course de l'amortisseur (DF, DR) ; et
un compteur (11) qui détecte la commutation de l'amortisseur (DF, DR) de la course de contraction à la course d'extension à partir des signaux émis par les capteurs de course (SF, SR), et qui compte le temps d'extension avec ce temps de commutation comme point de départ,
dans lequel le compteur (11) arrête le comptage et remet le temps d'extension à zéro lorsque l'amortisseur (DF, DR) est commuté de la course d'extension à la course de contraction, et continue de compter même lorsque l'amortisseur (DF, DR) se trouve dans dans un état d'arrêt dans lequel l'amortisseur (DF, DR) ne s'étend pas ou ne se contracte pas après avoir été commuté à la course d'extension,
et le dispositif de commande d'amortisseur (C) règle la force d'amortissement à un côté de compression de l'amortisseur (DF, DR) de manière à augmenter avec la longueur du temps d'extension de l'amortisseur (DF, DR).

2. Dispositif de commande d'amortisseur (C) selon la revendication 1, dans lequel
le dispositif de commande d'amortisseur (C) règle la force d'amortissement à un côté d'extension de l'amortisseur (DF, DR) de manière à augmenter avec la longueur du temps d'extension de l'amortisseur (DF, DR).

3. Dispositif de commande d'amortisseur (C) selon la revendication 1, dans lequel
le dispositif de commande d'amortisseur (C) comprend un capteur de course (SF, SR) qui détecte une longueur de course de l'amortisseur (DF, DR), et
obtient le temps d'extension à partir de la longueur de course.

4. Dispositif de suspension (C) comprenant
un amortisseur (DF, DR) capable d'ajuster une force d'amortissement et configuré pour être interposé entre une carrosserie (B) et une roue (WF, WR) d'un véhicule de type à selle (V), et
le dispositif de commande d'amortisseur (C) selon l'une des revendications 1 à 3.
